Europäisches Patentamt

European Patent Office

Office européen des brevets

(11) Veröffentlichungsnummer: **0 304 771**

**A1**

## (12) EUROPÄISCHE PATENTANMELDUNG

(21) Anmeldenummer: 88113274.0

(22) Anmeldetag: 16.08.88

(51) Int. Cl.⁴: **H02M 7/757**

(30) Priorität: 26.08.87 DE 3728512

(43) Veröffentlichungstag der Anmeldung:
01.03.89 Patentblatt 89/09

(84) Benannte Vertragsstaaten:
**DE FR GB SE**

(71) Anmelder: **Siemens Aktiengesellschaft Berlin und München**
**Wittelsbacherplatz 2**
**D-8000 München 2(DE)**

(72) Erfinder: **Kaufhold, Wolfgang, Dipl.-Ing.**
**Lannersberg 15**
**D-8520 Erlangen(DE)**

(54) Verfahren und Anordnung zur Steuerung einer leitungsgebundenen Hochspannungs-Gleichstrom-Übertragung (HGÜ).

(57) In der Gleichrichterstation (GR) wird der Soll-Gleichstrom ($I_W$) selbsttätig aus der Differenz einer sollstromabhängigen Steuerwinkelfunktion mit dem gleichrichterseitigen stromreglerabhängigen Steuerwinkel ($\alpha$) gebildet, wobei der Ist-Gleichstrom ($I_d$) von der leistungsabhängigen Gegenspannung in der Wechselrichterstation (WR) bestimmt ist und daß in dieser die Differenz aus dem Ist-Gleichstrom ($I_d$) und einem aus der Soll-Leistung ($P_W$) durch Division mit der Ist-Gleichspannung ($U_d$) erhaltenen Soll-Gleichstrom einen Führungsregler beeinflußt, der den Soll-gleichstrom für den Spannungsregler (UR) in der Wechselrichterstation (WR) vorgibt.

FIG 1

FIG 1A

EP 0 304 771 A1

FIG 1B

# Verfahren und Anordnung zur Steuerung einer leitungsgebundenen Hochspannungs-Gleichstrom-Übertragung (HGÜ)

Die Erfindung betrifft ein Verfahren zur Steuerung einer leitungsgebundenen HGÜ sowie eine Anordnung zur Durchführung des Verfahrens nach dem Oberbegriff des Anspruches 1.

Bei der üblichen Steuerung erfolgt die Leistungsvorgabe der HGÜ entweder von einer Zentralstelle oder von der verbraucherfernen Gleichrichterstation aus, wobei Fernübertragungsmittel zur Abstimmung von Stromsollwerten im normalen Betrieb und nach Fehlerfällen notwendig sind.

Der Erfindung liegt die Aufgabe zugrunde, ein Steuerverfahren für eine leitungsgebundene HGÜ zu schaffen, das ohne Zentralstelle und ohne gesonderte Telekommunikationsmittel die übertragene Leistung von der verbrauchernahen Wechselrichterstation vorgibt und dabei auf einfache und sichere Weise auch die Netzspannungshaltung erleichtert.

Die Lösung der gestellten Aufgabe bei einer solchen Steuerung gelingt durch die kennzeichnenden Merkmale des Anspruches 1.

Abweichend von den üblichen Maßnahmen erfolgt bei der erfindungsgemäßen Steuerung die Festlegung der in das gespeiste Drehstromnetz abgegebenen Wirkleistung allein von der einspeisenden Wechselrichterstation und die Gleichrichterstation der HGÜ stellt sich aufgrund ihrer stationseigenen Kriterien selbsttätig auf die geforderte Übertragungsleistung der HGÜ ein ohne eigenen direkten Einfluß auf die Leistungsregelung und die Netzspannungshaltung. Jedem Gleichstromwert der Gleichrichterstation ist hierzu ein bestimmter Steuerwinkel $\alpha$ so zugeordnet, daß kleinen Gleichstromwerten große Steuerwinkel ( $\alpha \geq 60°$ ) und großen Gleichstromwerten kleine Steuerwinkel ( $\alpha \leq 20°$ ) entsprechen, wodurch sich eine wesentlich geringere Änderung der Steuer- und Kommutierungsblindleistung ergibt.

Zur Durchführung des Steuerverfahrens nach Anspruch 1 dient eine Anordnung nach Anspruch 4.

Es ist demnach nur der Wechselrichterstation ein Leistungsregler zugeordnet und für die Gleichrichterstation nur der Stromregler für den Steuerwinkel $\alpha$ beibehalten.

Bei HGÜs mit mehreren Wechsel- und Gleichrichterstationen sind sämtliche Wechselrichterstationen mit Leistungsreglern versehen.

Weitere Ausgestaltungen der Erfindung sind Gegenstand zusätzlicher Ansprüche.

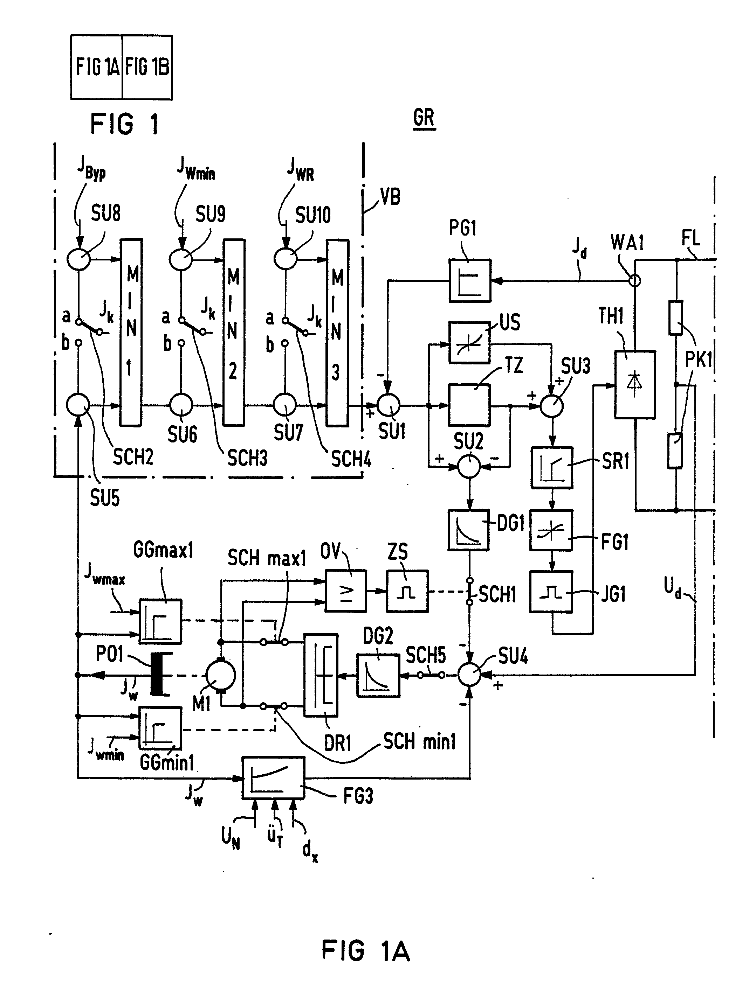

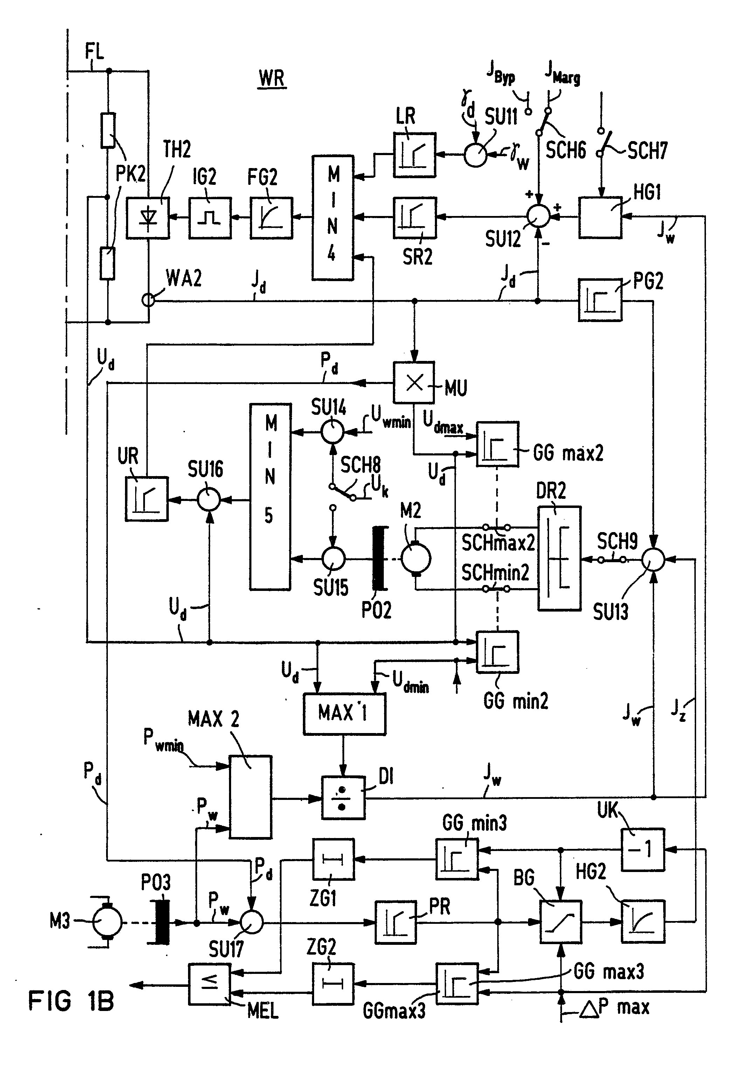

Ein Ausführungsbeispiel einer Steueranordnung zur Durchführung des Verfahrens nach der Erfindung ist vereinfacht in der Zeichnung dargestellt und nachfolgend näher erläutert.

Die beiden Drehstromnetze sowie die sie mit den Gleichrichter-bzw. Wechselrichterstationen kuppelnden Transformatoren und Filterkreise sowie Kompensationeinrichtungen sind nicht dargestellt, da sie zum Verständnis der Erfindung entbehrlich sind.

In der Gleichrichterstation GR ist ein steuerbarer Gleichrichter TH1 und in der Wechselrichterstation WR ein steuerbarer Wechselrichter TH2 angeordnet, die beide über eine Gleichstromübertragungsleitung FL verbunden sind. Über Gleichstromwandler WA1 und WA2 werden für beide Stationen der Ist- Gleichstrom $I_d$ abgenommen und mit Soll-Gleichströmen zu Regelvorgängen verglichen. Ebenso wird in beiden Stationen die anstehende Ist-Gleichspannung $U_d$ über Parallelkreise PK1,PK2 zu TH1 bzw. TH2 gemessen und als Steuerkriterium benutzt.

In der Gleichrichterstation GR wird der Ist-Gleichstrom $I_d$ über ein Porportionalglied PG1 einem Summierer SU1 zwecks Differenzbildung mit einem Vergleichstrom zugeführt. Der Vergleichstrom ist im störungsfreien Betrieb der Soll-Gleichstrom $I_w$ und bei gestörtem Betrieb ein abweichender Soll-Gleichstrom $I_{Byp}$, $I_{wmin}$ oder $I_{WR}$. $I_{Byp}$ ist ein gewählter Sollwert für den Bypass-Betrieb (im Normalfall $I_{Byp} \approx I_{Nenn/3}$).
$I_{WR}$ ist der Sollwert für Stromrichter bei einpoligen Fehlern, bei denen ein Betrieb möglich sein muß.
$I_{Wmin}$ ist der Sollwert für Wechselrichter bei Totalausfall des Gleichrichters. Die Stromdifferenz wird parallel einer Unempfindlichkeitsschwelle US, einem Totzeitglied TZ und einem Summierer SU2 zugeführt. Die Ausgangsgröße des Totzeitgliedes TZ wird zur Differenzbildung dem Summierer SU2 und außerdem einem mit dem Ausgang der Unempfindlichkeitsschwelle verbundenen Summierer SU3 zugeführt, der seinerseits ausgangsseitig an einen Stromregler SR1 (PJ-Regler) angeschlossen ist. Der Stromregler SR1 bewirkt an seinem Ausgang einen stromabhängigen Steuerwinkel in den Grenzen $\alpha_{max}$ und $\alpha_{min}$ und steuert über einen nachgeordneten Funktionsgeber FG1 und Impulsgeber IG1 den Gleichrichter TH1.

Die nur bei Betriebsänderungen (Störungen) auftretende Steuerspannungsänderung für die Gleichrichter auftretende Ausgangsgröße des Summierers SU2 wird über ein Differenzierglied DG1 und einen von einer Zeitstufe ZS angesteuerten Schalter SCH1 einem Summierer SU4 zugeführt, der außerdem von der Ist-Gleichspannung $U_d$ und einer Soll-Gleichspannung $U_W$ am Ausgang eines Funktionsgebers FG3 beaufschlagt wird. Die Soll-Gleichspannung $U_W$ wird im Funktionsgeber FG3 aus dem Soll-Gleichstrom $I_W$ in Abhängigkeit von der Netzspannung $U_N$, dem Transformator-Übersetzungsverhältnis $\ddot{u}_T$ und einer von den Induktivitäten im Kommutierungsbereich (Gleitungsdrosseln, Transformatorreaktanzen) abhängigen Größe dx als Funktion des Steuerwinkels abgeleitet. Die Ausgangsdifferenz des Summierers SU4 beeinflußt über einen Schalter SCH5 und ein Differenzierglied DG2 ein integrales Stellglied, bestehend aus einem Dreipunktregler DR1 und einem von diesen über Schalter SCHmax1 und SCHmin1 in entsprechender Stellrichtung beeinflußten Stellmotor M1 für den Stellabgriff eines an eine unveränderliche Spannungsquelle angeschlossenen Potentiometers PO1. Dessen elektrischer Ausgang ist leitend mit Grenzwertgebern GGmax1 und GGmin1 verbunden, so daß beim Ansprechen des einen oder anderen Grenzwertgebers der diesem zugeordnete Schalter SCHmax1 bzw. SCHmin1 den Motorstromkreis öffnet. Die Stellsignale für den Stellmotor M1 werden außerdem einer ODER-Verknüpfung OV zugeführt, die über die Zeitstufe ZS den Schalter SCH1 öffnet. Der am Stellabgriff des Potentiometers PO1 anstehende Soll-Gleichstrom $I_W$ wird dem besagten Funktionsgeber FG3 zur Bildung der Ist-Gleichspannung $U_W$ und einem Summierer SU5 zugeführt, der die Anfangsstufe eines Vergleichsstrombildners VB darstellt, dessen Ausgangsgröße als Vergleichsstrom dem eingangs genannten Summierer SU1 zugeführt wird zur Differenzbildung von Iststrom und Vergleichsstrom.

Der Vergleichsstrombildner VB enthält drei Minimalauswahlglieder MIN1, MIN2, MIN3. Die Ausgänge der beiden Minimalauswahlglieder MIN1 und MIN2 sind jeweils mit dem einen Eingang des jeweils folgenden Minimalauswahlgliedes MIN2 bzw. MIN3 durch je ein Summierglied SU6 und SU7 verbunden. Am jeweils zweiten Eingang der Minimalauswahlglieder MIN1, MIN2, MIN3 sind von Soll-Gleichstrom $I_W$ abweichende unterschiedliche Soll-Gleichströme $I_{Byp}$, $I_{wmin}$, $I_{WR}$ jeweils über Summierer SU8, SU9, SU10 wirksam, denen außerdem ein konstanter Gleichstrom $I_K$ jeweils durch Schalter SCH2, SCH3 und SCH4 zugeschaltet ist, wenn sich im störungsfreien Betrieb die Schalter jeweils in der Stellung a befinden. In diesem Fall gelangt der Soll-Gleichstrom $I_W$ vom Summierer SU5 auf den Summierer SU1, da die Summe $I_{Byp} + I_K$, $I_{wmin} + I_K$ und $I_{WR} + I_K$ jeweils größer als $I_W$ ist.

Bei relativ großer Stromdifferenz zwischen Sollwert $I_W$ und Istwert $I_d$ am Ausgang des Summierers SU1 wird dieser Ausgangswert über die Unempfindlichkeitsstufe US und den Summierer SU3 unmittelbar auf den Stromregler SR1 gegeben, im Falle relativ kleiner Stromdifferenzwerte gelangt der Ausgangswert des Summierers SU1 über das verzögernde Totzeitglied TZ und den Summierer SU3 verzögert zum Stromregler SR1.

Die Gleichrichterstation GR hat keinen entscheidenden Einfluß auf die Spannungshaltung des sie speisenden Drehstromnetzes, da jedem Ist-Gleichstrom $I_d$ ein bestimmter Steuerwinkel $\alpha$ so zugeordnet ist, daß bei relativ kleinem Ist-Gleichstrom $I_d$ ein Steuerwinkel $\alpha \geq 60°$ und bei relativ großem Ist-Gleichstrom $I_d$ ein Steuerwinkel $\alpha \leq 20$ zugeordnet wird, wodurch sich Steuer- und Kommutierungsblindleistung weniger ändern als bei der üblichen Vorgabe eines unveränderten minimalen Steuerwinkels $\alpha$ über den ganzen Bereich.

Durch die näherungsweise konstantbleibende Blindleistung kann die Netzspannung leichter eingehalten werden.

Zur Vermeidung von Regelpendelungen muß das Zeitverhalten des integralen Stellgliedes (DR1, M1, PO1, $GG_{max1}$, $GG_{min1}$) auf den Stromregler SR1 und die Stellzeit des Wechselrichters TH2 in der Wechselrichterstation WR für die Leistungsänderungen abgestimmt sein.

Die in das mit der Wechselrichterstation WR verbundene Drehstromnetz abgegebene Wirkleistung $P_d$ wird von der Wechselrichterstation WR durch einen Leistungsregler PR festgelegt, der zusätzlich zu einem üblichen Löschwinkelregler LR, einem Stromregler SR2 und einem Spannungsregler UR (alle PI-Regler) vorgesehen ist. Die Wechselrichterstation WR ist ebenfalls mit einem integralen Stellglied, bestehend aus einem Dreipunktregler DR2, einem Stellmotor M2 für den Stellabgriff eines Potentiometers PO2 sowie von spannungsabhängigen Grenzwertgebern GGmax2, GGmin2 gesteuerten Schaltern SCHmax2 und SCHmin2 im Steuerkreis des Stellmotors versehen.

Am Stellabgriff des Potentiometers PO2 liegt die Soll-Gleichspannung $U_w$ an. Sie wird auf einen Summierer SU15 gegeben, dessen Ausgang mit dem Eingang eines Minimalauswahlgliedes MIN5 verbunden ist. Ein zweiter Eingang des Minimalauswahlgliedes MIN5 ist mit dem Ausgang eines Summierers SU14, dem eingangsseitig ständig eine Größe $U_{Wmin}$ zugeführt wird. Die zweiten Eingänge der beiden Summierer sind durch einen Schalter SCH8 auf eine Größe $U_K > U_{max} \gg U_{Wmin}$ umschaltbar. Dem Eingang des Dreipunktreglers DR2 wird die Differenz aus dem von dem Wandler WA2 über ein Proportionalglied PG2 einem Summierer SU13 zugeführten Ist-Gleichstrom $I_d$ und dem am Ausgang eines Dividierers DI aus der Division der Wirkleistung $P_d$ mit der Ist-Gleichspannung $U_d$ gewonnenen Soll-Gleichstrom $I_w$ zugeführt, wobei der Summierer SU13 in weiter unten beschriebener Weise mit einer weiteren Korrekturgröße beaufschlagt werden kann. Der Ist-Gleichstrom $I_d$ wird ferner auf einen Summierer SU12 im Eingangskreis des Stromreglers SR2 und auf einen Multiplizierer MU gegeben, dem zur Nachbildung der Wirkleistung $P_d$ aus dem Produkt $I_d \cdot U_d$ außer-

dem die Ist-Gleichspannung $U_d$ zugeführt wird, die noch auf die beiden Grenzwertgeber GGmax2 und GGmin2 sowie ein Maximalauswahlglied MAX1 geführt ist. Die Leistung $P_d$ am Ausgang des Multiplizierers MU gelangt auf einen Summierer SU17 und wird dort mit einem Sollwert $P_w$ zu einer Differenzgröße verarbeitet, die auf den Eingang des Leistungsreglers PR gelangt. Der Ausgang des Leistungsreglers PR ist mit dem Eingang von Grenzwertgebern GGmax3 und GGmin3 sowie über einen Begrenzer BG und einen linearen Hochlaufgeber HG2 mit dem Summierer SU13 verbunden.

Zur Vorgabe des jeweiligen Leistungs-Sollwertes $P_w$ wird ein Potentiometer PO3 durch einen Stellmotor M3 entsprechend verstellt und der Ausgang des Stellabgriffs auf den Summierer SU17 und den Eingang eines Maximalauswahlgliedes MAX2 gegeben, dessen zweiter Eingang von einem Minimalwert $P_{wmin}$ beaufschlagt ist. Die Ausgänge der Maximalauswahlglieder MAX1 und MAX2 sind mit dem Dividierer DI zur Bildung des Soll-Gleichstromes $I_w$ verbunden. Dem zweiten Eingang des Maximalauswahlgliedes MAX1 ist der Minimalwert $U_{dmin}$ zugeführt. Der Ausgang des Minimalauswahlgliedes MIN5 ist einem Summierer SU16 zugeführt, der mit seinem zweiten Eingang von $U_d$ beaufschlagt ist. Der Ausgang des Summierers SU16 ist mit dem Spannungsregler UR verbunden.

Durch eine korregierende Leistungsregelung kann die beim Wechselrichter TH2 gesteuert vorgegebene Gleichspannung $U_d$ zusammen mit dem gemessenen Gleichstrom $I_d$ so eingestellt werden, daß die geforderte Wirkleistung $P_d$ innerhalb einer zulässigen Leistungsänderungsbereich $\Delta P_{max}$ liegt.

Der Wert $\Delta P_{max}$ wird unmittelbar dem Grenzwertgeber GGmax3 sowie dem Begrenzer BG und über ein Umkehrglied UK sowohl entgegenwirkend dem Begrenzer BG als auch dem Grenzwertgeber GGmin3 zugeführt. Die Ausgänge der beiden Grenzwertgeber GGmax3 und GGmin3 sind über Zeitglieder ZG1 und ZG2 mit einer Meldeeinrichtung ME für den Wert $\Delta P_{max}$ verbunden, um das Überschreiten des Wertes $\Delta P_{max}$ zu melden.

Der Steuerkreis des Wechselrichters TH2 ist über einen Impulsgeber IG2 und einem Funktionsgeber FG2 mit dem Ausgang eines vierten Minimalauswahlgliedes MIN4 verbunden, das drei Eingänge aufweist, von denen der eine mit dem Löschwinkelregler LR, der zweite mit dem Stromregler SR2 und der dritte mit dem Spannungsregler UR verbunden ist. An den Eingang des Löschwinkelreglers LR ist ein Summierer SU11 angeschlossen, der die Differenz aus dem Istwert $\gamma_d$ und einem Sollwert $\gamma_w$ des Löschwinkels bildet.

d Mit dem Eingang des Stromreglers SR2 ist der Summierer SU12 eingangsseitig verbunden, dem wahlweise der Vergleichsstrom $I_{Byp}$ oder der Marginalstrom $I_{marg}$ - je nach Stellung eines Schalters SCH6 - und der Ausgangs eines Hochlaufgebers HG1 zugeführt wird, der seinerseits über einen Schalter SCH7 beeinflußt werden kann, indem für die Dauer des Fehlers SCH7 geschlossen ist und dabei der Hochlaufgeber HG1 die Ausgangsgröße Null hat.

Im störungsfreien Betrieb muß der Gleichrichter TH1 einen Mindestgleichstrom $I_{dmin}$ liefern, der durch einen nicht dargestellten Grenzwertmelder erfaßt werden kann und der den Dreipunktregler DR1 veranlaßt, nach Maßgabe des anstehenden Soll-Gleichstromes $I_w$ eine Gleichspannung $U_d$ anzusteuern, auf die der Gleichrichter TH1 gemäß seiner $U_d$-$I_d$ -Zuordnung reagieren kann und am Wechselrichter TH2 entsprechend der anstehenden Soll-Leistung $P_w$ eine Korrektur des Soll-Gleichstromes $I_w$ über den Leistungsregler PR solange erfolgt, bis die vom Gleichrichter TH1 eingestellte $U_d$-$I_d$-Zuordnung mit der vom Wechselrichter TH2 geforderten $P_d$-$U_d$ -Zuordnung erfüllt ist. Bei einer Mehrforderung an Wirkleistung stellt sich unmittelbar eine Änderung des Soll-Gleichstromes $I_d$ ein, die über die Differenz $I_w$ - $I_d$ aus Soll- und Istwert des Gleichstromes zu einer Änderung der Gleichspannung $U_w$ führt und die Gleichspannungsänderung beim Gleichrichter TH1 die entsprechende Lieferung des Gleichstromes $I_d$ bewirkt.

Wie aus der obigen Beschreibung für die Wechselrichterstation WR hervorgeht, wird der Spannungssollwert $U_w$ der HGÜ über den Dreipunktregler DR2 aus dem Vergleich von $I_d$ mit $I_w$ gebildet. Der Soll-Gleichstrom $I_w$ seinerseits wird durch Division der Soll-Leistung $P_w$ mit der Ist-Gleichspannung $U_d$ erhalten.

Mit dieser neuen Methode werden mehrere Vorteile erreicht. So bestimmt der Wechselrichter TH2 selbst die abgegebene Leistung und der Dreipunktregler DR2 gewährleistet die Eigensicherheit der Regelung des Wechselrichters, da Erhöhungen des Gleichstromes $I_d$ über den jeweils vorgegebenen Sollwert $I_w$ automatisch zu einer Verringerung der Gleichspannung $U_d$ führen. Weiterhin bleiben die Funktionen der Regler LR und SR2 erhalten. Ein besonderer Vorteil besteht außerdem in der leichteren Einhaltung der Netzspannung, da die Zuordnung einer kleineren Gleichspannung zu einer geringeren Leistung (Strom) auch beim Wechselrichter TH2 im Teillastbereich wegen des größeren Löschwinkels $\gamma$ eine höhere Blindleistung bewirkt als bei dem bekannten Steuerungsverfahren mit minimalem Löschwinkel. Schließlich kann über die übergeordnete Leistungsregelung die beim Wechselrichter TH2 gesteuert vorgegebene Gleichspannung $U_d$ zusammen mit dem gemessenen Gleichstrom $I_d$ so vorgegeben werden, daß die jeweils geforderte Wirkleistung $P_d$ stationär genau eingehalten wird.

Statt des bisher angenommenen störungsfreien Betriebs der HGÜ sollen nachfolgend bestimmte mögliche Störungsfälle behandelt und die Wirkungsweise der Steuerung der einzelnen Gruppen der HGÜ dargelegt werden.

Im Fall einer 2- oder 3-poligen Störung im wechselrichterseitigen Drehstromnetz mit steilem Stromabfall $\frac{\text{I} \cdot \text{d}}{\text{t}} \gg 0$ wird am Wechselrichter TH2 Bypass-Betrieb eingeleitet, bei dem die Ist-Gleichspannung $U_d$ nahezu Null wird ( $U_d \ll U_{dmin}$ ~ 0,5 $U_{dn}$ ). Der Dreipunktregler DR2 wird durch Öffnen des Schalters SCH9 vom Summierer SU13 getrennt und dabei der bisher wirksame Wert von $U_d$ festgehalten.

Das besagte Unterschreiten von $U_d \ll U_{dmin}$ bei $I_d > 0$ bewirkt beim Gleichrichter TH1 die Vorgabe des Soll-Stromes $I_{Byp}$ während der Dauer des Unterschreitens von $I_d$ unter $I_{dmin}$, da der Schalter SCH2 die Stellung b einnimmt, bei der gilt $I_w + I_K > I_{Byp}$, so daß am Ausgang des Minimalauswahlgliedes MIN1 die Größe $I_{Byp}$ erscheint die kleiner als $I_{min} + I_K$ am zweiten Ausgang des Minimalauswahlgliedes MIN2 ist und am Ausgang desselben ebenfalls $I_{Byp}$ erscheint. Da $I_{Byp}$ auch kleiner ist als $I_{WR} + I_K$ am zweiten Eingang des Minimalauswahlgliedes MIN3, tritt wie gesagt letztendlich auch an dessen Ausgang die Größe $I_{Byp}$ als Soll-Vergleichsstrom auf.

Durch die Soll-Ist-Stromdifferenz und die störungsbedingte Verringerung der Ist-Gleichspannung $U_d$ wird der Dreipunktregler DR1 im Sinne eines kleineren Soll-Gleichstromes angesteuert und zwar erfolgt wegen $U_d \gg U_{dmin} \approx 0,5\ U_{dn}$ bei der besagten Störungsart eine Ansteuerung auf $Id_{min}$. Nach Beseitigung der 2- oder 3-poligen Störung im besagten Wechselstromnetz (erkennbar durch $U_d \gg U_{dmin}$) wird mit dem Soll-Gleichstrom $I_{wmin}$ der Betrieb wieder aufgenommen.

Bei Wiederkehr der wechselrichterseitigen Netzspannung wird der Bypass-Betrieb beendet, wodurch die vorhergehende Soll-Gleichspannung $U_w$ wieder zur Wirkung gelangt.

An den Zuständen $U_d \gg U_{dmin}$ und $I_d > 0$ erkennt der Gleichrichter TH1 die Einsatzfähigkeit des Wechselrichters TH2 und schaltet vom $I_{Byp}$-Betrieb auf den Dreipunktregler DR1 für den Soll-Gleichstrom $I_w$ um.

Im Fall einer 1-poligen Störung im wechselrichterseitigen Drehstromnetz wird am Wechselrichter TH2 über das Minimalauswahlglied MIN4 und Schalter SCH7 die Ist-Gleichspannung $U_{dmin}$ über Minimalauswahlglied MIN5 und Spannungsregler UR begrenzt wirksam und über den Gleichrichter TH1 wieder entsprechend zurückgefahren.

Nach Fortschaltung des 1-poligen Fehlers im betreffenden Netz wird der Leistungsregler PR wieder freigegeben und durch Rückschalten des Schalters SCH8 auch die vorhergehende Soll-Gleichspannung $U_w$ freigegeben, wodurch $U_d \gg U_{dmin}$ wird und der Gleichrichter TH1 den entsprechenden Strom $I_d$ führt.

Ein Kippen des Wechselrichters TH2 kann also aus den Kriterien $U_d \ll U_{dmin}$, $I_d > I_{dn}$ und dem schnellen Anstieg von $I_d$ erkannt werden. Ein kippfreier Wechselrichterbetrieb wird durch eine vorübergehende Vergrößerung des Sollwertes des Löschwinkels $\gamma_w$ erreicht, da für die Dauer der Löschwinkelvergrößerung der Leistungsregler PR gesperrt ist.

Bei einer 1-poligen Störung in dem gleichrichterseitigen Drehstromnetz nimmt der Schalter SCH4 die Stellung b ein, bei der $I_w + I_K > I_{WR}$ ist, so daß am Ausgang des Minimalauswahlgliedes MIN2 der Soll-Gleichstrom $I_{WR}$ erscheint.

Der Gleichrichter TH1 wird demnach während der Dauer der 1-poligen Netzstörung mit dem Soll-Strom $I_{WR}$ gefahren. Die dabei auftretende Gleichspannung steuert den Soll-Gleichstrom $I_w$ über den Dreipunktregler DR1 auf einen Wert für etwa den halben oder zweidrittel Nennstrom $I_{dn}$. Nach Wegfall der besagten Störung wird mit diesem reduzierten Istwert der Betrieb wieder aufgenommen.

Bei einer Störung durch einen gleichstromseitigen Kurzschluß ($I_d > I_{dn}$ ) wird der Schalter SCH3 in die Stellung b gebracht, bei der $I_w + I_K > I_{Wmin}$ ist. Da für das Minimalauswahlglied MIN3 die Beziehung gilt $I_{WR} + I_K > I_{Wmin}$, erscheint auch am Ausgang des Minimalauswahlgliedes MIN3 der Strom $I_{Wmin}$. Somit steht am Ausgang des Minimalauswahlgliedes MIN3 der Soll-Gleichstrom $I_{wmin}$ an, der den Gleichrichter TH1 der Gleichrichterstation GR in den Wechselrichterbetrieb steuert. Infolge $U_d < 0$ wird durch den Dreipunktregler DR1 der Soll-Gleichstrom $I_{wmin}$ angesteuert (der knapp über dem Lückstrom liegt) mit dem der Gleichrichter TH1 wieder startet.

Unterbrechungen auf der FL-Leitung ($I_d \rightarrow 0$) sowie ein Stillstand der Anlage können durch Unterschreiten von $I_{wmin}$ erkannt werden, wobei der Soll-Gleichstrom $I_{wmin}$ über den Dreipunktregler DR1 vorgegeben wird.

Störungen am Wechselrichter TH2 können aus der Gleichspannung $U_d$ abgeleitet werden, wenn der Funktionsgeber FG3 des Gleichrichters TH1 so eingestellt wird, daß bei $I_{wmin}$ ungefähr noch die halbe Nennspannung $U_{dn}$ zugeordnet wird. Ein Unterschreiten von 0,5 $U_{dn}$ deutet auf eine Störung der Wechselrichterstation WR hin, wenn das Drehstromnetz der eigenen Station in Ordnung ist.

Im Falle einer 2- oder 3-poligen Störung in dem die Gleichrichterstation GR speisenden Drehstromnetz werden die Ventile von TH1 in den Bypass gesteuert und der Eingang zum Dreipunktregler DR1 unterbrochen. Nach Wegschalten der besagten Netzstörung wird der Stromregler SR1 mit dem ursprünglichen Sollwert $I_w$ wieder freigegeben.

Eine solche Störung im gleichrichterseitigen Drehstromnetz kann bei der Wechselrichterstation WR aus den Kriterien $U_d < U_{dmin}$, $I_d < I_w$ und $\delta I_d/\delta t < 0$ erkannt werden; sie steuert den Stromregler SR2 in der Wechselrichterstation WR durch die Vorgabe von $I_{Byp}$ über den Schalter SCH6 in den Gleichrichter-Betrieb. Während der besagten Störung ist der Leistungsregler PR blockiert. Aus dem auftretenden Kriterium $U_d > U_{dmin}$ erkennt der Wechselrichter TH2 den störungsfreien Betrieb des Gleichrichters TH1 bei Wegfall der Störung im Drehstromnetz. Über den Schalter SCH7, bei gleicher Anregung wie SCH6 wird der Hochlaufgeber HG1 nach Rückschalten des Schalters SCH6 auf $I_{marg}$ freigegeben und bringt den Soll-Gleichstrom $I_w$ von Null auf den vom Dreipunktregler DR1 vorgegebenen Wert.

Beim Wechselrichter TH2 ist ein gleichstromseitiger Kurzschluß nicht von einem mehrpoligen Fehler im gleichrichternahen speisenden Drehstromnetz zu unterscheiden, da der Gleichrichter TH1 dabei auch einen Bypass-Betrieb des Wechselrichters TH2 unterstellen kann.

Somit bewirkt ein gleichstromseitiger Kurzschluß bei Gleich- und Wechselrichter einen Übergang in den Gleichrichterbetrieb mit $I_{wmin}$ als festen Sollwert, wobei aber der gleichstromseitige Kurzschlußstrom zum Erlöschen kommt. Als unterscheidendes zusätzliches Kriterium ist die Zeit gegeben, da Netzfehler, die die Bypass-Regelung einleiten, in längsten 500 ms abgeschaltet sind. Wenn der Bypass-Betrieb diese Zeitspanne merklich (z.B. 1 sec) überschreitet, dann werden beide Stationen GR und WR abgeschaltet und somit auch die Einspeisung des Fehlers unterbrochen.

Wenn die Gleichrichterstation GR ihre Grenzwerte $I_{dmin}$ bzw. $I_{dmax}$ erreicht, wird dies vom Wechselrichter TH2 durch Ansteuern von $U_{dmin}$ bzw. $U_{dmax}$ ohne Änderung von $I_d$ sowie durch Ansteuern der Begrenzungen des Leistungsreglers PR erkannt und der Leistungs-Sollwert $P_w$ in nicht dargestellter Weise zeitverzögert soweit zurückgestellt, bis der Ausgang des Leistungsreglers PR keiner Begrenzung mehr unterliegt. Für die Dauer von $U_{dmax}$ bzw. $U_{dmin}$ wird die Begrenzung von $P_d$ angezeigt.

## Ansprüche

1. Verfahren zur Steuerung einer leitungsgebundenen Hochspannungs-Gleichstrom-Übertragung (HGÜ) zwischen drehstromnetzgespeisten Gleich- und Wechselrichterstationen,
**dadurch gekennzeichnet,**
daß gleichrichterstationsseitig der Soll-Gleichstrom ($I_w$) selbsttätig aus der Differenz einer sollstromabhängigen Steuerwinkelfunktion mit dem gleichrichterseitigen stromreglerabhängigen Steuerwinkel ($\alpha$) gebildet wird, indem der Stromregler von der Differenz aus dieser steuerwinkelabhängigen Führungsgröße mit dem jeweiligen Ist-Gleichstrom beeinflußt wird und der Ist-Gleichstrom seinerseits von der wechselrichterseitig leistungsabhängig vorgegebenen Gegenspannung so festgelegt wird, daß wechselrichterstationsseitig die Differenz aus dem jeweiligen Ist-Gleichstrom und einer aus der Soll-Leistung ($P_w$) durch Division mit der Ist-Gleichspannung ($U_d$) erbrachten Soll-Gleichstromes einen Führungsregler beeinflußt, so daß dieser den Sollgleichstrom für den wechselrichterseitigen Spannungsregler vorgibt.

2. Verfahren nach Anspruch 1,
**dadurch gekennzeichnet,**
daß in der sollstromabhängigen Steuerwinkelfunktion zusätzliche Spannunsänderungen in dem die Gleichrichterstation speisenden Drehstromnetz berücksichtigenden Größen, wie insbes. das Übersetzungsverhältnis von Stromrichtertransformatoren, enthalten sind.

3. Verfahren nach Anspruch 1,
**dadurch gekennzeichnet,**
daß dem wechselrichterstationsseitigem Soll-Gleichstrom noch eine leistungsreglerabhängige Zusatzgröße zum Ausgleich von Steuerungsungenauigkeiten und der Beseitigung unerwünschter Einflüsse der Netzspannungen und der Transformatorübersetzungsverhältnisse überlagert wird.

4. Anordnung zur Durchführung des Verfahrens nach den Ansprüchen 1 bis 3;
**dadurch gekennzeichnet,**
daß der gleichrichterstationsseitige Ist-Gleichstrom ($I_d$) und ein Soll-Gleichstrom zur Differenzbildung einem Summierer (SU1) und von diesem sowohl dem Gleichrichter (TH1) der Gleichrichterstation (GR) als auch einem weiteren Summierer (SU4) zum Vergleich mit der gleichrichterseitigen Ist-Gleichspannung ($U_d$) und der in einem Funktionsgeber (FG3) gebildeten sollstromabhängige Steuerwinkelfunktion zugeführt ist, dessen Ausgang ein integrales Stellglied (DR1,M1,GGmax1,GGmin1) für ein dem Ist-Gleichstrom ($I_w$) liefernde Potentiometer (PO1) steuert, wozu der Ist-Gleichstrom auf den Funktionsgeber (FG1) und einen Vergleichsstrombildner (VB) geführt ist, welcher seinerseits mit dem ersten Summierer (SU1) verbunden ist und daß ein wechselrichterstationsseitiger Leistungsregler (PR) zusammen mit dem jeweiligen Ist-Gleichstrom ($I_d$) mit der Wechselrichterstation (WR) und einer aus der Ist-Leistung und der Ist-Gleichspannung ($U_d$) auf der Wechselrichterstation (WR) durch einen Dividierer (DI) gewonnenen Ist-Gleichstrom ($I_w$) ein integrales Stellglied (DR2,M2,GGmax2,GGmin2) für ein Potentiometer (PO2) steuert und das Potentiometer (PO2) dem Spannungsregler (UR) steuert, der seinerseits dem Wechselrichter (TH2) beeinflußt.

EP 0 304 771 A1

| FIG 1A | FIG 1B |

## FIG 1

GR

FIG 1A

FIG 1B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 146 726 (SIEMENS)<br>----- | | H 02 M 7/757 |

RECHERCHIERTE SACHGEBIETE (Int. Cl.4)

H 02 M 7/00
H 02 J 3/00

Der vorliegende Recherchenbericht wurde für alle Patentansprüche erstellt

| Recherchenort | Abschlußdatum der Recherche | Prüfer |
|---|---|---|
| DEN HAAG | 19-09-1988 | BERTIN M.H.J. |